(19) Europäisches Patentamt / European Patent Office / Office européen des brevets

(11) **EP 2 911 904 B1**

(12) **FASCICULE DE BREVET EUROPEEN**

(45) Date de publication et mention de la délivrance du brevet:
**31.05.2017 Bulletin 2017/22**

(21) Numéro de dépôt: **13805435.8**

(22) Date de dépôt: **17.10.2013**

(51) Int Cl.:
**B60W 30/18** (2012.01)   **B60K 6/48** (2007.10)
**B60K 6/52** (2007.10)   **B60W 10/02** (2006.01)

(86) Numéro de dépôt international:
**PCT/FR2013/052487**

(87) Numéro de publication internationale:
**WO 2014/064371 (01.05.2014 Gazette 2014/18)**

(54) **PROCEDE DE COMMANDE DE COUPLAGE/DECOUPLAGE D'UNE MACHINE DE TRACTION D'UN VEHICULE AUTOMOBILE**

VERFAHREN ZUR STEUERUNG DER KOPPLUNG/ENTKOPPLUNG EINER ANTRIEBSMASCHINE EINES KRAFTFAHRZEUGS

METHOD FOR CONTROLLING THE COUPLING/UNCOUPLING OF A DRIVE MACHINE OF A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.10.2012 FR 1260206**

(43) Date de publication de la demande:
**02.09.2015 Bulletin 2015/36**

(73) Titulaire: **Peugeot Citroën Automobiles SA 78140 Vélizy Villacoublay (FR)**

(72) Inventeurs:
• LAUNAY, Cedric
  F-78680 Epone (FR)
• CROGUENNOC, Tanguy
  F-92130 Issy Les Moulineaux (FR)
• MILHAU, Yohan
  F-78400 Chatou (FR)

(56) Documents cités:
EP-A1- 1 604 856   EP-A2- 1 669 237
DE-A1- 19 616 583   DE-A1-102008 042 051
FR-A1- 2 927 849

**Description**

La présente invention se rapporte à un procédé de commande de couplage/découplage d'une machine de traction à/d'un train de roues d'un véhicule automobile.

L'invention appartient au domaine des véhicules hybrides comprenant au moins un moteur thermique et au moins une autre machine de traction, telle qu'une machine électrique. D'autres types de machines de traction peuvent également être envisagés, tels qu'une machine hydraulique ou encore à air comprimé.

Ce procédé de commande s'applique à un véhicule automobile comportant une chaîne de traction disposant d'un mécanisme de couplage/découplage pour coupler/découpler la machine de traction à/d'au moins un train de roues de ce véhicule.

Ce procédé de commande s'applique plus particulièrement aux véhicules hybrides comportant un calculateur de gestion de la chaîne de traction pour le couplage/découplage de cette machine de traction.

Les procédés connus de commande du couplage/découplage d'une machine de traction comportent généralement un premier processus pour autoriser le couplage/découplage appelé processus d'autorisation. Ce processus d'autorisation est confirmé ou non par un second processus de décision de couplage/découplage prenant en compte des contraintes organiques et/ou sécuritaires.

L'autorisation de couplage/découplage est habituellement définie en fonction d'informations qui sont relatives au véhicule considéré, comme par exemple l'enfoncement de la pédale d'accélérateur, l'enfoncement de la pédale de frein, la vitesse du véhicule, l'inclinaison de la route, ou une contrainte d'utilisation de la machine de traction et/ou du moteur thermique. DE 196 16 583 A1 divulgue un procédé de couplage et de découplage d'une machine de traction telle que décrit par le préambule de la revendication 1 et par le préambule de la revendication 2. Par ailleurs, on connaît par le document FR-A1-2 927 849 un procédé de commande de couplage/découplage d'une machine de traction d'un véhicule. Ce procédé permet de coupler/découpler cette machine lorsqu'un paramètre caractéristique du déplacement du véhicule franchit un seuil prédéterminé.

Ces procédés connus de commande de couplage/découplage présentent néanmoins plusieurs inconvénients. Ainsi, ils peuvent conduire à un couplage permanent d'une machine pendant une durée relativement longue, alors même que la vitesse du véhicule est stabilisée, ce qui induit des pertes d'énergie (typiquement plusieurs kilowatts à vitesse élevée) du fait du couple de pertes de la machine. Ces pertes dégradent la consommation du véhicule.

L'invention a pour but de remédier aux inconvénients de l'art antérieur en prenant en compte, pour autoriser le couplage/découplage de la machine de traction, au moins un paramètre dépendant de l'évolution de la valeur de la consigne de couple appliquée à au moins un train de roues du véhicule.

Dans ce but, la présente invention propose un procédé de commande de couplage d'une machine de traction d'un véhicule automobile à un train de roues du véhicule, remarquable en ce qu'il comporte des étapes consistant à :

- déterminer un instant où une consigne de couple à appliquer à au moins un train de roues du véhicule est inférieure à un seuil de couplage prédéterminé ;
- calculer un premier paramètre et/ou un second paramètre qui dépendent de cet instant ;
- autoriser le couplage lorsque ce premier paramètre est supérieur à une première valeur prédéterminée et/ou lorsque ce second paramètre est supérieur à une seconde valeur prédéterminée.

Dans le même but, la présente invention propose également un procédé de commande de découplage d'une machine de traction d'un véhicule automobile d'un train de roues du véhicule, remarquable en ce qu'il comporte des étapes consistant à :

- déterminer un instant où une consigne de couple à appliquer à au moins un train de roues du véhicule est supérieure à un seuil de découplage prédéterminé ;
- calculer un premier paramètre et/ou un second paramètre qui dépendent de cet instant ;
- autoriser le découplage lorsque ce premier paramètre est supérieur à une valeur première prédéterminée et/ou lorsque ce second paramètre est supérieur à un seconde valeur prédéterminée.

Ainsi, l'invention permet de réduire la consommation du véhicule en maximisant la récupération d'énergie lors des phases de récupération d'énergie, tout en minimisant le couple de pertes engendré par la machine électrique.

Selon une caractéristique particulière, la consigne de couple utilisée dans ce procédé de commande est une demande de couple total à appliquer à l'ensemble des trains de roues du véhicule.

En variante, cette consigne de couple est une demande de couple à appliquer à un train de roues du véhicule.

Selon une caractéristique particulière, le seuil mentionné plus haut dépend de la vitesse du véhicule.

Selon une caractéristique particulière, la première valeur prédéterminée et/ou la seconde valeur prédéterminée mentionnées plus haut dépendent de la vitesse du véhicule.

Selon une caractéristique particulière, le premier paramètre mentionné plus haut est une durée depuis laquelle la consigne a franchi le seuil mentionné plus haut.

Selon une caractéristique particulière, le second paramètre mentionné plus haut est l'intégrale temporelle de la valeur absolue de l'écart entre la consigne et le seuil mentionné plus haut.

Selon une caractéristique particulière, la machine de traction est une machine électrique.

Dans le même but que celui indiqué précédemment, l'invention a aussi pour objet un véhicule comportant des moyens adaptés à mettre en oeuvre des étapes d'un procédé de commande selon l'une quelconque des caractéristiques précédentes.

L'invention sera mieux comprise et d'autres aspects et avantages apparaîtront plus clairement à la lecture de la description qui suit de modes particuliers de réalisation, donnés à titre d'exemples nullement limitatifs et en référence aux dessins qui l'accompagnent, dans lesquels :

- la figure 1 présente schématiquement un mode particulier de réalisation d'un véhicule conforme à l'invention, comprenant une chaîne de traction et un calculateur de gestion de cette chaîne de traction,
- la figure 2 est un graphique illustrant un exemple de mise en oeuvre d'un procédé selon l'invention pour autoriser le couplage ou le découplage d'une machine de traction,
- la figure 3A est un organigramme illustrant des étapes d'un mode particulier de réalisation d'un procédé de commande conforme à l'invention pour autoriser le couplage d'une machine de traction d'un véhicule ;
- la figure 3B est un organigramme illustrant des étapes d'un mode particulier de réalisation d'un procédé de commande conforme à l'invention pour autoriser le découplage d'une machine de traction d'un véhicule.

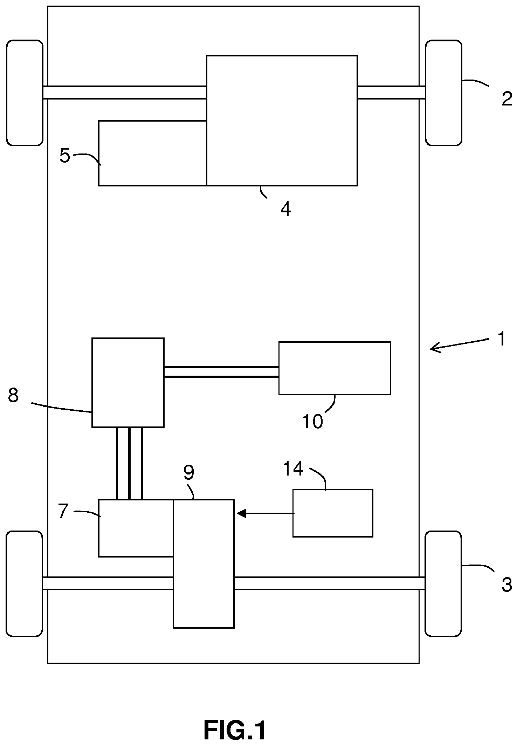

Dans ce qui suit, on considère, à titre d'exemple non limitatif, un véhicule automobile du type du véhicule 1 illustré par la figure 1. L'invention peut s'appliquer à tout type de véhicule disposant d'une chaîne de traction comprenant au moins un moteur thermique 5 et au moins une machine de traction 7 associée à un dispositif de stockage d'énergie 10. Elle concerne en effet tout type de véhicule hybride terrestre ou maritime (ou fluvial) ou encore aéronautique.

Par ailleurs, on considère dans ce qui suit, à titre d'exemple non limitatif, que la machine de traction 7 est de type électrique. Mais l'invention n'est pas limitée à ce type de machine. Ainsi, elle concerne également les machines (ou moteurs) hydrauliques ou à air comprimé, dès lors qu'elles permettent de récupérer de l'énergie.

On a schématiquement représenté sur la figure 1 un véhicule hybride 1 comprenant une chaîne de traction et un calculateur 14 de gestion de la chaîne de traction.

La chaîne de traction du véhicule 1 comprend au moins un moteur thermique 5 associé à une première transmission 4 pour entraîner un premier train de roues 2 du véhicule 1.

On notera que la première transmission 4 peut être automatisée ou non. Par conséquent, il pourra s'agir d'une boîte automatique, d'une boîte de vitesses manuelle pilotée ou non, ou d'une boîte de vitesses à double embrayage (ou DCT), ou encore d'une transmission à variation continue (ou CVT).

La machine de traction 7 est associée à une seconde transmission 9 pour entraîner un second train de roues 3 du véhicule 1.

Par exemple, la première transmission 4 est chargée d'entraîner en rotation les roues du train avant du véhicule 1, tandis que la seconde transmission 9 est chargée d'entraîner en rotation les roues du train arrière du véhicule 1. Mais l'inverse est également possible.

Cette machine de traction 7 étant, dans l'exemple retenu pour la présentation de l'invention, une machine électrique, elle est connectée à un convertisseur de puissance 8 (ou onduleur) pour échanger de l'énergie avec le dispositif de stockage d'énergie électrique 10, par exemple de type batterie haute tension.

La seconde transmission 9 comporte un moyen de couplage/découplage chargé de coupler/découpler la machine de traction 7 au/du second train de roues 3 du véhicule 1 sur ordre du calculateur 14 de gestion de la chaîne de traction.

Ce moyen de couplage/découplage est connu en soi. C'est par exemple un mécanisme à crabots ou bien un embrayage.

Comme indiqué précédemment, l'invention propose de mettre en oeuvre dans le véhicule 1 un procédé destiné à autoriser le couplage/découplage de la machine de traction 7 au/du second train de roues 3.

Un tel procédé peut être mis en oeuvre par le calculateur 14 de gestion de la chaîne de traction, mais cela n'est pas obligatoire. En variante, ce procédé pourrait en effet être mis en oeuvre par un autre équipement, directement ou indirectement, couplé à ce calculateur 14. Ce procédé peut être mis en oeuvre par des modules logiciels (ou informatiques ou encore « software »), ou par une combinaison de circuits électroniques (ou « hardware ») et de modules logiciels.

Dans une autre variante, non illustrée par la figure 1, le moteur thermique 5, la machine de traction 7 et les transmissions 4 et 9 peuvent être contrôlés et/ou échanger des informations, directement ou indirectement, avec l'équipement mettant en oeuvre le procédé conforme à l'invention.

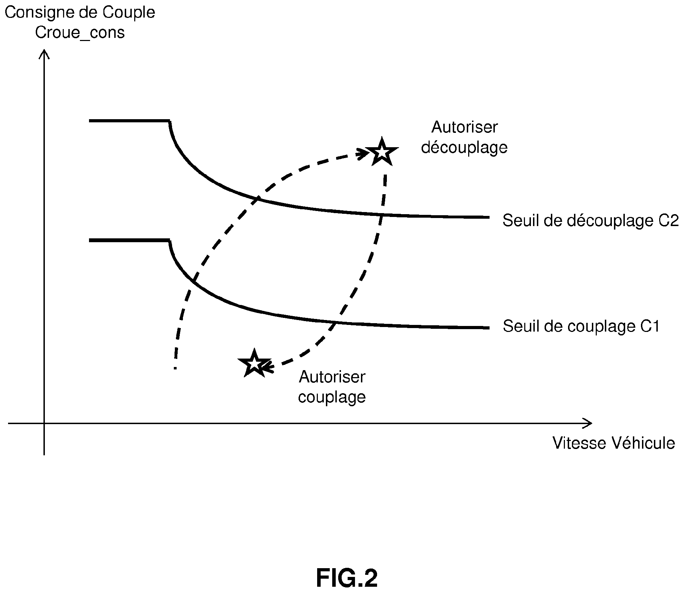

La figure 2 illustre un exemple de mise en oeuvre dans le véhicule 1 d'un procédé selon l'invention pour autoriser le couplage et/ou le découplage de la machine de traction 7 en fonction de l'évolution d'une consigne de couple Croue_cons et de la vitesse du véhicule qui sont transmises au calculateur 14.

La consigne de couple Croue_cons peut par exemple être une demande de couple total à appliquer à l'ensemble des trains de roues 2 et 3 du véhicule 1. Cette consigne Croue_cons peut également être une demande de couple à appliquer à un seul train de roues 3 du véhicule, de préférence celui qui est couplé/découplé à/de la machine de traction 7.

Lorsque cette consigne de couple Croue_cons est inférieure à un seuil de couplage C1 prédéterminé et qu'un premier et un second paramètres dépendants de l'instant où cette consigne a franchi ce seuil sont respectivement supérieurs à une première et une seconde valeurs prédéterminées, le couplage est autorisé.

Alternativement, le couplage peut être autorisé lorsqu'une seule de ces deux dernières conditions est remplie.

De manière analogue, lorsque la consigne de couple Croue_cons est supérieure à un seuil de découplage C2 prédéterminé et qu'un premier et un second paramètres dépendants de l'instant où cette consigne a franchi ce seuil sont respectivement supérieurs à une autre première et une autre seconde valeurs prédéterminées, le découplage est autorisé.

Alternativement, le découplage peut être autorisé lorsqu'une seule de ces deux dernières conditions est remplie.

Ainsi qu'illustré sur la figure 2, les valeurs des seuils de couplage C1 et de découplage C2 peuvent, dans un mode particulier de réalisation, dépendre de la vitesse du véhicule.

A titre d'exemple non limitatif, on pourra choisir des valeurs de seuils de couplage C1 et de découplage C2 comprises entre -4000 et 11000 N.m.

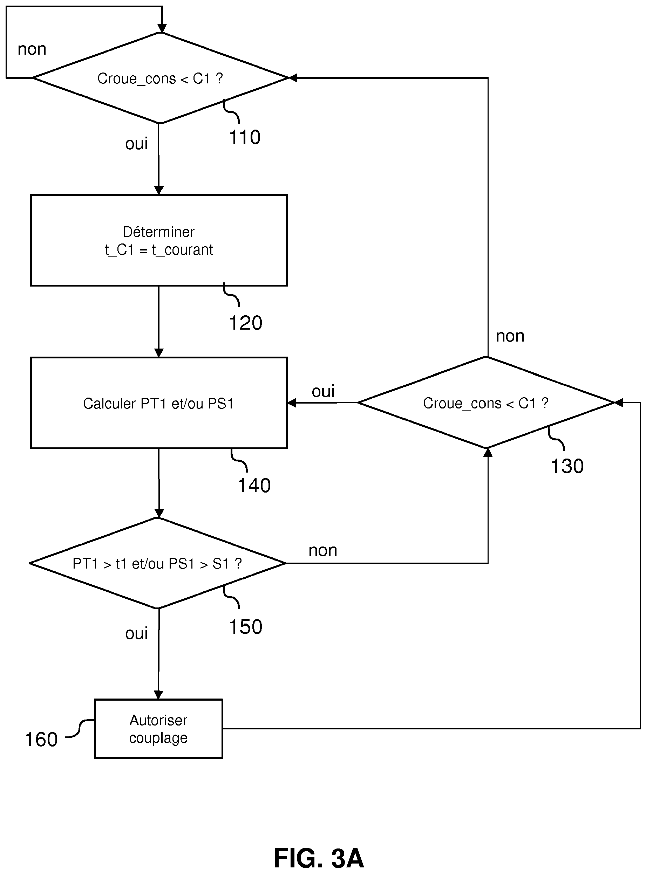

La figure 3A illustre ainsi un mode particulier de réalisation d'un procédé de commande conforme à l'invention pour autoriser le couplage d'une machine de traction d'un véhicule.

La consigne Croue_cons est comparée dans une étape 110 au seuil de couplage C1 prédéterminé.

Dans le cas où cette consigne Croue_cons est inférieure au seuil de couplage C1, on détermine lors d'une étape 120 un instant t_C1 correspondant à l'instant courant t_courant. Dans le cas contraire l'étape 110 est répétée.

A la suite de l'étape 120, on calcule lors d'une étape 140 un premier paramètre PT1 et/ou un second paramètre PS1.

Lors d'une étape 150, on compare ensuite le premier paramètre PT1 avec une première valeur prédéterminée t1 et/ou le second paramètre PS1 avec une seconde valeur prédéterminée S1.

Selon une caractéristique particulière du procédé de commande pour autoriser le couplage, ce premier paramètre PT1 est une durée depuis laquelle la consigne Croue_cons est inférieure au seuil de couplage C1. Dans ce cas, le premier paramètre PT1 peut par exemple être obtenu par la formule suivante :

$$PT1 = t\_courant - t\_C1$$

t_courant étant l'instant courant où est effectué le calcul.

La valeur prédéterminée de l'étape 150 est dans ce cas une durée t1 qui peut être exprimée en secondes (s).

A titre d'exemple non limitatif, la durée t1 peut être choisie dans une plage de valeur comprise entre 0 et 3 secondes.

Selon une caractéristique particulière de ce procédé, le second paramètre PS1 est l'intégrale temporelle de la valeur absolue de l'écart entre la consigne Croue_cons et le seuil de couplage C1. Dans ce cas, le paramètre PS1 peut par exemple être obtenu par la formule suivante :

$$PS1 = \int_{t\_C1}^{t\_courant} |Croue\_cons - C1| \, dt$$

t_courant étant l'instant courant où est effectué le calcul.

La valeur prédéterminée de l'étape 150 est dans ce cas un seuil S1 qui peut être exprimé en N.m.s.

A titre d'exemple non limitatif, le seuil S1 peut être choisi dans une plage de valeur comprise entre 0 et 10000 N.m.s.

La première valeur prédéterminée t1 et/ou la seconde valeur prédéterminée S1 peuvent, dans certains modes particuliers de réalisation, dépendre de la vitesse du véhicule.

Si le premier paramètre PT1 est supérieur à cette première valeur prédéterminée et/ou si le second paramètre PS1 est supérieur à cette seconde valeur prédéterminée, alors le couplage est autorisé lors d'une étape 160. Dans le cas contraire, on passe à une étape 130.

A la suite de l'étape 160, on passe également à l'étape 130.

L'étape 130 permet de comparer à nouveau la consigne Croue_cons avec le seuil de couplage C1.

Si la consigne Croue_cons est inférieure au seuil de couplage C1, on passe à l'étape 140. Dans le cas contraire, on retourne à l'étape 110.

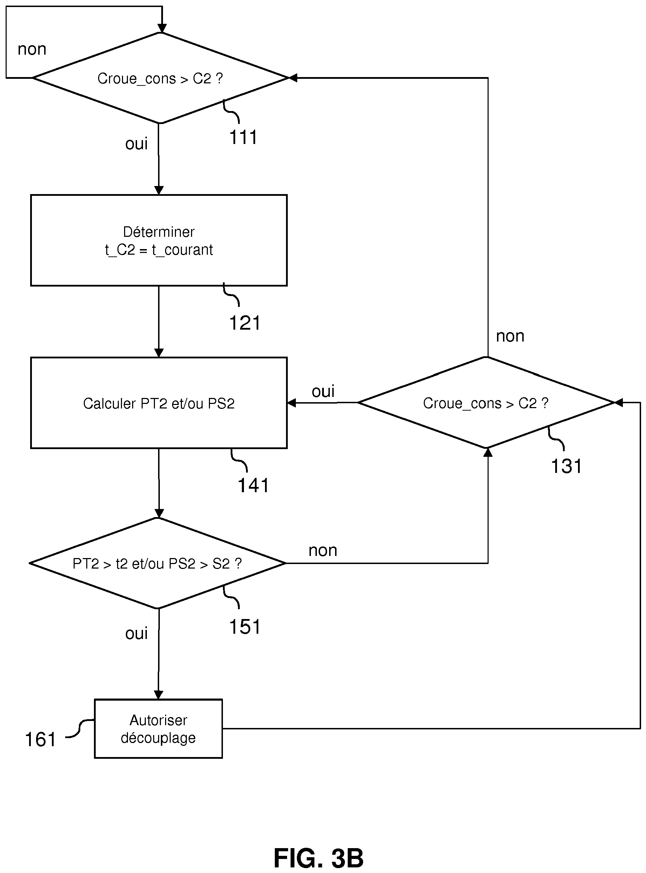

De manière similaire à ce qui est présenté pour autoriser le couplage, la figure 3B illustre un mode particulier de réalisation d'un procédé de commande conforme à l'invention pour autoriser le découplage d'une machine de traction d'un véhicule.

La consigne Croue_cons est comparée dans une étape 111 au seuil de découplage C2 prédéterminé.

Dans le cas où cette consigne Croue_cons est supérieure au seuil de découplage C2, on détermine lors d'une étape 121 un instant t_C2 correspondant à l'instant courant t_courant. Dans le cas contraire l'étape, 111 est répétée.

A la suite de l'étape 121, on calcule lors d'une étape 141 un premier paramètre PT2 et/ou un second paramètre PS2.

Lors d'une étape 151, on compare ensuite le premier paramètre PT2 avec une première valeur prédéterminée t2 et/ou le second paramètre PS2 avec une seconde valeur prédéterminée S2.

Selon une caractéristique particulière du procédé d'autorisation de découplage, ce premier paramètre PT2 est une durée depuis laquelle la consigne Croue_cons est supérieure au seuil de découplage C2. Dans ce cas, le paramètre PT2 peut par exemple être obtenu par la formule suivante :

$$PT2 = t\_courant - t\_C2$$

t_courant étant l'instant courant où est effectué le calcul.

La valeur prédéterminée de l'étape 151 est dans ce cas une durée t2 qui peut être exprimée en secondes (s).

A titre d'exemple non limitatif, la durée t2 peut être choisie dans une plage de valeur comprise entre 0 et 3 secondes.

Selon une caractéristique particulière de ce procédé, le second paramètre PS2 est l'intégrale temporelle de la valeur absolue de l'écart entre la consigne Croue_cons et le seuil de découplage C2. Dans ce cas, le paramètre PS2 peut par exemple être obtenu par la formule suivante :

$$PS2 = \int_{t\_C2}^{t\_courant} |Croue\_cons - C2|\, dt$$

t_courant étant l'instant courant où est effectué le calcul.

La valeur prédéterminée de l'étape 151 est dans ce cas un seuil S2 qui peut être exprimé en N.m.s.

A titre d'exemple non limitatif, le seuil S2 peut être choisi dans une plage de valeur comprise entre 0 et 10000 N.m.s.

La première valeur prédéterminée t2 et/ou la seconde valeur prédéterminée S2 peuvent, dans certains modes particuliers de réalisation, dépendre de la vitesse du véhicule.

Si le premier paramètre PT2 est supérieur à cette première valeur prédéterminée et/ou si le second paramètre PS2 est supérieur à cette seconde valeur prédéterminée, alors le découplage est autorisé lors d'une étape 161. Dans le cas contraire, on passe à une étape 131.

A la suite de l'étape 161, on passe également à l'étape 131.

L'étape 131 permet de comparer à nouveau la consigne Croue_cons avec le seuil de découplage C2.

Si la consigne Croue_cons est supérieure au seuil de découplage C2, on passe à l'étape 141. Dans le cas contraire, on retourne à l'étape 111.

Ainsi, la mise en oeuvre d'un procédé de couplage/découplage d'une machine de traction tel que décrit ci-dessus permet de maximiser la récupération d'énergie lors des phases de récupération et de minimiser le couple de perte engendré la machine électrique, ce qui conduit à réduire la consommation du véhicule.

**Revendications**

1. Procédé de commande de couplage d'une machine de traction (7) d'un véhicule automobile (1) à un train de roues (2, 3) du véhicule (1), comportant des étapes consistant à :

- déterminer (120) un instant (t_C1) où une consigne de couple (Croue_cons) à appliquer à au moins un train de roues (2, 3) du véhicule est inférieure (110) à un seuil de couplage (C1) prédéterminé ; le procédé étant **caractérisé en ce qu'**il comporte des étapes consistant à :

    - calculer (140) un premier paramètre (PT1) et/ou un second paramètre (PS1) qui dépendent dudit instant (t_C1) ;
    - autoriser (160) le couplage lorsque ledit premier paramètre (PT1) est supérieur (150) à une première valeur (t1) prédéterminée et/ou lorsque ledit second paramètre (PS1) est supérieur (150) à une seconde valeur (S1) prédéterminée.

2. Procédé de commande de découplage d'une machine de traction (7) d'un véhicule automobile (1) d'un train de roues (2, 3) du véhicule (1), comportant des étapes consistant à :

    - déterminer (121) un instant (t_C2) où une consigne de couple (Croue_cons) à appliquer à au moins un train de roues (2, 3) du véhicule est supérieure (111) à un seuil de découplage (C2) prédéterminé ; le procédé étant **caractérisé en ce qu'**il comporte des étapes consistant à :

    - calculer (141) un premier paramètre (PT2) et/ou un second paramètre (PS2) qui dépendent dudit instant (t_C2) ;
    - autoriser (161) le découplage lorsque ledit premier paramètre (PT2) est supérieur (151) à une première valeur (t2) prédéterminée et/ou lorsque ledit second paramètre (PS2) est supérieur (151) à une seconde valeur (S2) prédéterminée.

3. Procédé de commande selon la revendication 1 ou 2, **caractérisé en ce que** ladite consigne de couple (Croue_cons) est une demande de couple total à appliquer à l'ensemble des trains de roues (2, 3) du véhicule (1).

4. Procédé de commande selon la revendication 1 ou 2, **caractérisé en ce que** ladite consigne de couple est une demande de couple à appliquer à un train de roues (2, 3) du véhicule (1).

5. Procédé de commande selon l'une quelconque des revendications précédentes, **caractérisé en ce que** ledit seuil (C1 ; C2) dépend de la vitesse du véhicule (1).

6. Procédé de commande selon l'une quelconque des revendications précédentes, **caractérisé en ce que** ladite première valeur prédéterminée (t1 ; t2) et/ou ladite seconde valeur prédéterminée (S1 ; S2) dépendent de la vitesse du véhicule (1).

7. Procédé de commande selon l'une quelconque des revendications précédentes, **caractérisé en ce que** ledit premier paramètre (PT1 ; PT2) est une durée depuis laquelle ladite consigne (Croue_cons) a franchi ledit seuil (C1 ; C2).

8. Procédé de commande selon l'une quelconque des revendications 1 à 6, **caractérisé en ce que** ledit second paramètre (PS1 ; PS2) est une intégrale temporelle de la valeur absolue de l'écart entre ladite consigne (Croue_cons) et ledit seuil (C1 ; C2).

9. Procédé de commande selon l'une quelconque des revendications précédentes, **caractérisé en ce que** ladite machine de traction (7) est une machine électrique.

10. Véhicule **caractérisé en ce qu'**il comporte des moyens adaptés à mettre en oeuvre des étapes d'un procédé de commande selon l'une quelconque des revendications précédentes.

**Patentansprüche**

1. Verfahren zum Steuern des Kuppelns einer Antriebsmaschine (7) eines Kraftfahrzeugs (1) an einem Fahrwerk (2, 3) des Fahrzeugs (1), das folgende Schritte umfasst:

- Bestimmen (120) eines Augenblicks (t_C1), in dem ein Drehmomentsollwert (Croue_cons), der an mindestens ein Fahrwerk (2, 3) des Fahrzeugs anzulegen ist, kleiner (110) ist als ein vorbestimmter Kupplungsschwellenwert (C1);

Verfahren **dadurch gekennzeichnet, dass** es folgende Schritte umfasst:

- Berechnen (140) eines ersten Parameters (PT1) und/oder eines zweiten Parameters (PS1), die von dem Augenblick (t_C1) abhängen,
- Gestatten (160) des Kuppelns, wenn der erste Parameter (PT1) größer (150) ist als ein erster vorbestimmter Wert (t1) und/oder, wenn der zweite Parameter (PS1) größer (150) als ein zweiter vorbestimmter Wert (S1) ist.

2. Verfahren zum Steuern des Entkuppelns einer Antriebsmaschine (7) eines Kraftfahrzeugs (1) von einem Fahrwerk (2, 3) des Fahrzeugs (1), das die folgenden Schritte umfasst:

- Bestimmen (121) eines Augenblicks (t_C2), in dem ein Drehmomentsollwert (Croue_cons), der an mindestens ein Fahrwerk (2, 3) des Fahrzeugs anzulegen ist, größer (111) als ein vorbestimmter Abkuppelschwellenwert (C2) ist;

Verfahren **dadurch gekennzeichnet, dass** es folgende Schritte umfasst:

- Berechnen (141) eines ersten Parameters (PT2) und/oder eines zweiten Parameters (PS2), die von dem Augenblick (t_C2) abhängen,
- Gestatten (161) des Entkuppelns, wenn der erste Parameter (PT2) größer (151) als ein erster vorbestimmter Wert (t2) ist, und/oder wenn der zweite Parameter (PS2) größer (151) als ein zweiter vorbestimmter Wert (S2) ist.

3. Steuerverfahren nach Anspruch 1 oder 2, **dadurch gekennzeichnet, dass** der Drehmomentsollwert (Croue_cons) eine Gesamtanfrage nach Drehmoment ist, das an sämtliche Fahrwerke (2, 3) des Fahrzeugs (1) anzulegen ist.

4. Steuerverfahren nach Anspruch 1 oder 2, **dadurch gekennzeichnet, dass** der Drehmomentsollwert eine Anfrage nach Drehmoment ist, das an ein Fahrwerk (2, 3) des Fahrzeugs (1) anzulegen ist.

5. Steuerverfahren nach einem der vorhergehenden Ansprüche, **dadurch gekennzeichnet, dass** der Schwellenwert (C1; C2) von der Geschwindigkeit des Fahrzeugs (1) abhängt.

6. Steuerverfahren nach einem der vorhergehenden Ansprüche, **dadurch gekennzeichnet, dass** der erste vorbestimmte Wert (t1; t2) und/oder der zweite vorbestimmte Wert (S1; S2) von der Geschwindigkeit des Fahrzeugs (1) abhängen.

7. Steuerverfahren nach einem der vorhergehenden Ansprüche, **dadurch gekennzeichnet, dass** der erste Parameter (PT1; PT2) eine Dauer ist, ab welcher der Sollwert (Croue_cons) den Schwellenwert (C1; C2) überschritten hat.

8. Steuerverfahren nach einem der Ansprüche 1 bis 6, **dadurch gekennzeichnet, dass** der zweite Parameter (PS1; PS2) ein zeitliches Integral des Absolutwerts des Unterschieds zwischen dem Sollwert (Croue_cons) und dem Schwellenwert (C1; C2) ist.

9. Steuerverfahren nach einem der vorhergehenden Ansprüche, **dadurch gekennzeichnet, dass** die Antriebsmaschine (7) eine elektrische Maschine ist.

10. Fahrzeug **dadurch gekennzeichnet, dass** es Mittel umfasst, die zum Umsetzen der Schritte eines Steuerverfahrens nach einem der vorhergehenden Ansprüche angepasst ist.

**Claims**

1. A method for controlling the coupling of a drive machine (7) of a motor vehicle (1) to a set of wheels (2, 3) of the vehicle (1), comprising steps consisting in:

- determining (120) a time (t_C1) when a torque setpoint (Croue_cons) to be applied to at least one set of wheels (2, 3) of the vehicle is less (110) than a predetermined coupling threshold (C1) ;

the method being **characterized in that** it comprises steps consisting in:

- calculating (140) a first parameter (PT1) and/or a second parameter (PS1) which depend on said time (t_C1);
- authorizing (160) the coupling when said first parameter (PT1) is greater (150) than a first predetermined value (t1) and/or when said second parameter (PS1) is greater (150) than a second predetermined value (S1).

2. A method for controlling the uncoupling of a drive machine (7) of a motor vehicle (1) from a set of wheels (2, 3) of the vehicle (1), comprising steps consisting in:

- determining (121) a time (t_C2) when a torque setpoint (Croue_cons) to be applied to at least one set of wheels (2, 3) of the vehicle is greater (111) than a predetermined uncoupling threshold (C2);

the method being **characterized in that** it comprises steps consisting in:

- calculating (141) a first parameter (PT2) and/or a second parameter (PS2) which depend on said time (t_C2);
- authorizing (161) the uncoupling when said first parameter (PT2) is greater (151) than a first predetermined value (t2) and/or when said second parameter (PS2) is greater (151) than a second predetermined value (S2).

3. The method for controlling according to Claim 1 or 2, **characterized in that** said torque setpoint (Croue_cons) is a total torque demand to be applied to the entire sets of wheels (2, 3) of the vehicle (1).

4. The method for controlling according to Claim 1 or 2, **characterized in that** said torque setpoint is a torque demand to be applied to a set of wheels (2, 3) of the vehicle (1).

5. The method for controlling according to any one of the preceding claims, **characterized in that** said threshold (C1; C2) depends on the speed of the vehicle (1).

6. The method for controlling according to any one of the preceding claims, **characterized in that** said first predetermined value (tl; t2) and/or said second predetermined value (S1; S2) depend on the speed of the vehicle (1).

7. The method for controlling according to any one of the preceding claims, **characterized in that** said first parameter (PT1; PT2) is a duration from which said setpoint (Croue_cons) has crossed said threshold (C1; C2).

8. The method for controlling according to any one of Claims 1 to 6, **characterized in that** said second parameter (PS1; PS2) is a time integral of the absolute value of the difference between said setpoint (Croue_cons) and said threshold (C1; C2).

9. The method for controlling according to any one of the preceding claims, **characterized in that** said drive machine (7) is an electric machine.

10. A vehicle, **characterized in that** it comprises means suited to implement steps of a method for controlling according to any one of the preceding claims.

**FIG.1**

Consigne de Couple
Croue_cons

Autoriser
découplage

Seuil de découplage C2

Seuil de couplage C1

Autoriser
couplage

Vitesse Véhicule

FIG.2

**FIG. 3A**

non

Croue_cons < C1 ?

110

oui

Déterminer
t_C1 = t_courant

120

Calculer PT1 et/ou PS1

140

non

oui    Croue_cons < C1 ?

130

PT1 > t1 et/ou PS1 > S1 ?    non

oui    150

160    Autoriser
couplage

non

Croue_cons > C2 ?

111

oui

Déterminer
t_C2 = t_courant

121

Calculer PT2 et/ou PS2

141

oui

Croue_cons > C2 ?

131

non

PT2 > t2 et/ou PS2 > S2 ?

non

151

oui

161

Autoriser
découplage

## FIG. 3B

## RÉFÉRENCES CITÉES DANS LA DESCRIPTION

**Documents brevets cités dans la description**

- DE 19616583 A1
- FR 2927849 A1